# EUROPEAN PATENT APPLICATION

(11) **EP 2 461 534 A1**
(43) Date of publication of application: **06.06.2012**
(21) Application number: 10193312.5
(22) Date of filing: 01.12.2010
(51) Int. Cl.: H04L 29/06, H04N 5/00, H04N 7/16, H04N 7/167

(54) **Control word protection**

(71) Applicant: IRDETO B.V., 2132 LS Hoofddorp (NL)
(72) Inventor: Roelse, Petrus Lambertus Adrianus, 2132 LS, Hoofddorp (NL)
(74) Representative: Tucker, Nigel P.

(57) **Abstract**

The invention enables a chip set of a receiver of a conditional access system to receive control words securely from a head-end system in the content delivery network. Hereto the chip set comprises means for processing an incoming message to obtain a virtual control word, and using the virtual control word to generate the control word used for descrambling content received from the content delivery network. The authenticity of incoming messages is verified, in the sense that content descrambling fails if an incoming message is not authentic.

## Description

### FIELD OF THE INVENTION

The present disclosure relates to loading a control word onto a chip set targeted for secured delivery. The control word is used for descrambling content in a content descrambler of the chip set. In particular, though not necessarily, this disclosure relates to a method for loading the control word onto the chip set that is connected to a smart card, a secure device for use in a conditional access system, a head-end system, a method for using the control word in the head-end system and/or the conditional access system, a computer product program using such method(s).

### BACKGROUND

Conditional access systems for digital video broadcast (DVB) transmissions are well known and widely used in conjunction with pay television services. Such systems provide secure transmission of a broadcast stream comprising one or more services to a digital receiver contained for example in a set-top box or a mobile terminal supporting broadcast services. To protect the broadcast services from unauthorized viewing, the data packets are scrambled (encrypted) at the transmitter side with an encryption key commonly referred to as a control word. A conditional access/digital rights management (CA/DRM) system implements the selective distribution of the control words to authorized receivers only. Further security is provided by periodically changing the control words so they are only valid for a certain period. Typically control words are transmitted in encrypted form to the receiver using so-called entitlement control messages (ECMs).

In the receiver an ECM is filtered out of a transport stream and sent to a secure computing environment, e.g., a smart card. The smart card subsequently decrypts the ECM using a higher-level key, which is common to all smart cards that are authorized to access the TV channels associated with the control words included in the ECM. The control word is returned to the receiver, which loads the control word into the descrambler for descrambling data.

Control word piracy is a significant problem in digital video broadcasting (DVB) systems. A common attack uses the fact that a control word is a shared key that unlocks content on all receivers. An adversary can break part of the key delivery infrastructure to obtain control words and re-distribute the control words to unauthorized receivers. For instance, sometimes attackers are able to intercept a control word that is transmitted from the smart card to the receiver and re-distribute it over local networks or over the internet. The re-distributed control word is then used to descramble the scrambled services without a legitimate authorized smart card.

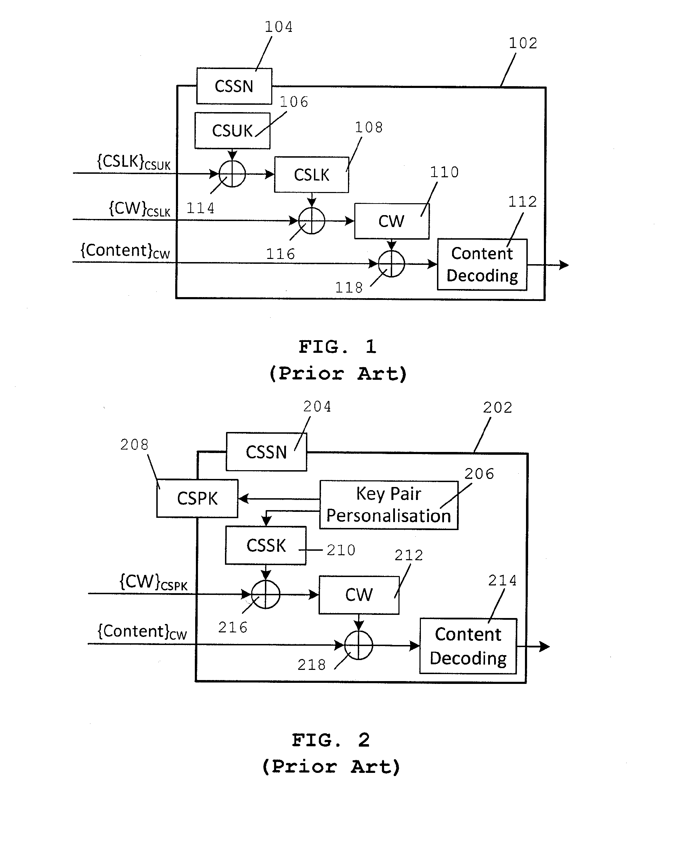

In some cases, a chip set supports a key hierarchy to secure the control word delivery based on secret keys installed during the manufacturing process. **FIG. 1** shows a prior art example of chip set **102** of a receiver to load keys to descramble content. Decryption modules **114, 116** and **118** use encrypted input data and an input key to obtain decrypted output data. The chip manufacturer personalizes the chip set with a pseudo-random value for the chip set unique key CSUK and assigns a chip set serial number CSSN to the chip set. Elements **104** and **106** are read-only memory locations, for storing CSSN and CSUK, respectively. Elements **108** and **110** are read-and-write memory locations for temporary storing decrypted output data. As shown, content decoder **112** decodes the descrambled content. Dataflows between elements are indicated by arrows. Labels along the arrows identify the dataflows.

As shown in **FIG. 1****,** a content stream scrambled with control word CW, denoted by {Content}_{CW}, is received in the chip set 102. To provide the control word needed to descramble the content, chip set 102 supports secure loading of the associated CW using input {CW}_{CSLK}, which denotes the CW encrypted with a chip set load key CSLK. Said CSLK is received at chip set 102 encrypted with a chip set unique key CSUK, which is denoted by input {CSLK}_{CSUK}. To decrypt {CSLK}_{CSUK}, CSUK is needed. The CSUK and the chip set serial number CSSN associated with the particular chip set are typically pre-installed in memory locations on the chip set (element 104 and element 106, respectively) and cannot be altered. In operation, CSUK is retrieved from secured storage (i.e., element **106)** in chip set **102** and is used to decrypt the CSLK from {CSLK}_{CSUK} using decryption module **114.** Once decrypted, CSLK is stored in memory (i.e., element **108),** and can be used to decrypt {CW}_{CSLK} using decryption module **116.** Lastly, the clear control word stored in memory (i.e., element **110)** is used by decryption module **118** to descramble incoming scrambled content {Content}_{CW}, such that the content may be decoded by the chip set using content decoder **112.** Content decoder **112** can be external to the chip set **102** and is typically a part of the receiver.

Typically, a chip manufacturer supplies a list of (CSSN, CSUK) pairs to a CA/DRM supplier, enabling the loading of a value for the chip set load key CSLK into a chip set, using the method depicted in **FIG. 1****.** Known conditional access systems use a key loading mechanism, such as shown in **FIG. 1****,** by sending an entitlement management message 'EMM' and an entitlement control message 'ECM' from a head-end system to the smart card. For the example in **FIG. 1****,** the EMM includes the CSLK and its encrypted version {CSLK}_{CSUK}. The ECM includes an encrypted CW. The smart card provides {CSLK}_{CSUK} to the chip set and may use the CSLK as a key for loading a sequence of CWs. That is, the smart card may use CSLK to re-encrypt a CW included in an ECM, resulting in a message {CW}_{CSLK} that is sent to the chip set.

While the example in **FIG. 1** depicts a method that uses symmetric cryptographic algorithms, it is also possible to use asymmetric, or public-key, cryptography as shown in **FIG. 2****.**

**FIG. 2** shows a typical chip set implementing the loading of a control word using asymmetric cryptographic algorithms. Chip set **202,** associated with chip set serial number CSSN includes element **204** (read-only memory storage location), element **208** and element **210** for storing a key pair (read-and-write memory storage locations), and element **212** for temporarily storing a clear control word (read-and-write memory location). To protect the authenticity of the key pair, preferably element **208** and element **210** are write-once memory locations.

Instead of loading a pair (CSSN, CSUK) during manufacturing and sending the pairs to the CA/DRM suppliers and their operators (as performed in the example shown in **FIG. 1****),** the chip manufacturer of chip set **202** shown in **FIG. 2** personalizes chip set **202** by activating key pair personalization module **206** that generates a random key pair consisting of a chip set public key CSPK and a chip set secret key CSSK. The CSPK and CSSK are stored in elements **208** and **210,** respectively.

The manufacturer maintains pairs of numbers, each pair comprising of a chip set serial number CSSN and its associated chip set public key CSPK. The list of (CSSN, CSPK) pairs can be made available to all CA/DRM suppliers. Notice that only the authenticity of these pairs needs to be protected, as the numbers CSSN and CSPK are not secret. The CSPK is used to encrypt a CW that only the receiver with the corresponding CSSK can decrypt (using decryption module **216).** That is, the encrypted control word {CW}_{CSPK} is a unique data pattern as no other receiver will generate the same random key pair (CSPK, CSSK), so sharing a CW loading message {CW}_{CSPK} is not possible. The decrypted CW, stored temporarily in element **212** is then used to decrypt {Content}_{CW} by decryption module **218** to produce the unscrambled content. The unscrambled content is then subsequently decoded using content decoder **214.**

The benefit of the public-key solution described in relation to **FIG. 2** is that the chip manufacturer no longer needs to manage any secrets. However, as CSPK is a public key, it is also available to an adversary. In particular, if the attacker manages to obtain a CW from a compromised receiver, then the compromised CW can be encrypted with the CSPK of any legitimate receiver and loaded into its chip set. Obviously, this attack can be prevented by using an asymmetric cryptographic mechanism as a secret-key mechanism. A well known example of such a mechanism is RSA with a randomly selected encryption (or decryption) exponent, both of which are kept secret. However, the resulting solution would no longer have the benefit that the chip manufacturer does not need to manage any secrets.

With the widespread adoption of broadband internet, CW re-distribution is rapidly becoming a significant threat to the secure delivery of digital content. The current solution for protecting a CW relies on symmetric cryptographic algorithms. Although this results in a secure mechanism, it forces the chip set manufacturer to take on the responsibility of managing secrets and tracking individual chip sets. This solution thus makes it impossible to produce universal chip sets that can be deployed by multiple CA/DRM suppliers independently from the chip manufacturer. In particular, in the method based on symmetric cryptographic algorithms, either secret keys need to be shared between different CA/DRM suppliers, or a trusted third party is required for managing secret keys.

Loading a CW using public-key cryptography removes the need to preload a secret key and to transfer secret information to a CA/DRM supplier. However, as an adversary also has access to the public key, he/she can also load a CW in the descrambler chip set. Hence, this method does not protect the authenticity of a CW loading message. A separate mechanism for protecting the authenticity of CA/DRM messages delivered to the chip set is needed. However, this implies that the secret keys for an authenticity scheme such as a message authentication code (MAC) or an asymmetric digital signature scheme need to be managed, introducing similar key management issues as described for the symmetric solution.

There is a need for an improved solution for loading control words on to chip sets that solves the problems described above.

### SUMMARY OF THE INVENTION

The systems and methods described in the disclosure solve the problems associated with prior art systems by combining a public-key mechanism to protect the confidentiality of a CW with a cryptographic mechanism to protect the authenticity of a second, independent key. This second key is part of a key pair which can be used to protect the authenticity of messages delivered to the chip set.

More precisely, a pseudo-random value is generated for the (de-)scrambling of content. However, instead of using this value directly as a CW, a function is applied to this value and a root key of the authenticity mechanism. The output of this function includes a CW, and possibly more values to be used in the content (de-)scrambling mechanism. The function is chosen in such a way that the authenticity of the root key is protected, in the sense that content descrambling will fail if the root key is not authentic. This means that an attacker needs to re-scramble and re-distribute the content with attacker generated CA/DRM messages that can be used by the chip set to descramble the re-distributed content.

According to one aspect of the disclosure, a method for securely obtaining a control word in a chip set of a receiver is disclosed, said control word for descrambling scrambled content transmitted from a content delivery network. At the chip set, a secured version of a control word is received from a smart card communicably connected to the chip set, wherein the secured version of the virtual control word is a virtual control word provided from a head-end system to the smart card and secured by the smart card to protect its authenticity and confidentiality. The control word is obtained from the secured version of the virtual control word. The virtual control word and a signature verification key associated with the head-end system are provided as inputs to a cryptographic function in the chip set to produce a given output, the given output including at least one control word, wherein the cryptographic function has the property that it is infeasible to determine a key pair including a signature key, a signature verification key associated with the signature key and another virtual control word, such that the determined signature verification key and the other virtual control word map to the given output of the cryptographic function. The other virtual control word may or may not be the same (e.g., has the same value) as the virtual control word obtained from the secured version of the virtual control word.

According to another aspect of the disclosure, the secured version of the virtual control word comprises the virtual control word secured by an encryption of the virtual control word using a public key associated with the chip set and a signature of the virtual control word using a secret signature key associated with the head-end system, such that the secured version of the virtual control word is decryptable by the chip set using a secret key associated with the chip set and that the signature of the virtual control word is verifiable by the chip set using the signature verification key associated with the head-end system.

According to yet another aspect of the disclosure, the methods described herein further includes receiving, at the chip set, a secured version of a load key, wherein the secured version of the load key is a load key secured to protect its authenticity and confidentiality. Said secured version of the virtual control word, as received at the chip set, is a virtual control word secured by an encryption of the virtual control word using the load key.

In some embodiments, the secured version of the load key, as received at the chip set is a load key secured by an encryption of the load key using a public key associated with the chip set and a signature of the load key using a secret signature key associated with the head-end system, such that the secured version of the load key is decryptable by the chip set using a secret key associated with the chip set and that the signature of the load key is verifiable by the chip set using a signature verification key associated with the head-end system.

In certain embodiments, the methods described herein further comprise receiving the signature verification key associated with the head-end system from the head-end system.

According to one aspect of the disclosure, a method for enabling the secure loading of a control word onto a chip set of a receiver, the control word allowing the receiver to descramble scrambled content transmitted from a content delivery network, is disclosed. At a smart card communicably connected to the chip set, a virtual control word from a head-end system of the content delivery network is received. In the smart card, the virtual control word is secured to produce a secured version of the virtual control word, such that its authenticity and confidentiality are protected. The secured version of the virtual control word is transmitted from the smart card to the chip set.

According to another aspect of the disclosure, securing the virtual control word comprises encrypting the virtual control word with a public key associated with the chip set and signing the virtual control word with a secret signature key associated with the head-end system, such that the secured version of the virtual control word is decryptable by the chip set using a secret key associated with the chip set and the origin of the secured version of the virtual control word is verifiable by the chip set using a signature verification key associated with the head-end system.

According to yet another aspect of the disclosure, the methods described herein further comprise transmitting a secured version of a load key to the chip set. The secured version of the load key, as transmitted to the chip set, is secured to protect its authenticity and confidentiality. The secured version of virtual control word, as transmitted to the chip set, is secured by an encryption of the virtual control word using said load key.

In some embodiments, the methods described herein further comprises providing a signature verification key associated with the head-end system of the content delivery network to the chip set to enable the chip set to derive the control word from the virtual control word.

According to an aspect of the disclosure, a method for enabling the loading of a control word from a head-end system of a content delivery network onto a chip set of a receiver, the control word allowing the receiver to descramble scrambled content transmitted from the content delivery network, is disclosed. A virtual control word is generated at the head-end system. The virtual control word is transmitted from the head-end system to a smart card via the intermediary of the receiver, wherein the smart card is communicably connected to the chip set. Using a cryptographic function, at least the virtual control word is combined with a signature verification key associated with the head-end system as inputs to to produce a given output, the given output including at least one control word, wherein the cryptographic function has the property that it is infeasible to determine a key pair including a signature key, a signature verification key associated with the signature key and another virtual control word, such that the determined signature verification key and the other virtual control word map to the given output of the cryptographic function. The other virtual control word may or may not be the same (e.g., have the same value) as the virtual control word generated at the head-end system.

According to another aspect of the disclosure, content is scrambled using the control word to produce scrambled content, and the scrambled content is transmitted to the chip set.

In some embodiments, a chip set in a receiver may be used for securely obtaining a control word, the control word for descrambling scrambled content received from a content delivery network. The chip set may include a communication module configured to receive a secured version of a virtual control word from a smart card communicably connected to the chip set, wherein the secured version of the virtual control word is a virtual control word provided from a head-end system to the smart card and secured by the smart card to protect its authenticity and confidentiality. The chip set may further include a security module configured to obtain the virtual control word from the secured version of the virtual control word. The chip set may also include a cryptographic module configured to provide at least the virtual control word and a signature verification key associated with the head-end system as inputs to a cryptographic function to produce a given output, the given output including at least one control word, wherein the cryptographic function has the property that it is infeasible to determine a key pair including a signature key, a signature verification key associated with the signature key and another virtual control word, such that the determined signature verification key and the other virtual control word map to the given output of the cryptographic function. The other virtual control word may or may not be the same (e.g., have the same value) as the virtual control word obtained by the security module.

In certain embodiments, a smart card communicably connected to a chip set may be used for enabling the secure loading of a control word onto the chip set of a receiver, the control word allowing the receiver to descramble scrambled content transmitted from a content delivery network. The smart card may include a communication module configured to receive a virtual control word from a head-end system of the content delivery network. The smart card may further include a security module configured to secure the virtual control word to produce a secured version of the virtual control word, such that its authenticity and confidentiality are protected. The smart card may also include a transmission module configured to transmit the secured version of the virtual control word from the smart card to the chip set.

In some embodiments, a head-end system of a content delivery network may be used for enabling a loading of a control word onto a chip set of a receiver, the control word allowing the receiver to descramble scrambled content transmitted from the content delivery network. The head-end system may include a control word generator configured to generate a virtual control word. The head-end system may further include a communication module configured to transmit the virtual control word from the head-end system to a smart card via the intermediary of the receiver, wherein the smart card is communicably connected to the chip set. The head-end system may also include a cryptographic module combining, using a cryptographic function, at least the virtual control word with a public key associated with the head-end system as to produce a given output, the given output including at least one control word, wherein the cryptographic function has the property that it is infeasible to determine a key pair including a signature key, a signature verification key associated with the signature key and another virtual control word, such that the determined signature verification key and the other virtual control word map to the given output of the cryptographic function. The other virtual control word may or may not be the same (e.g., have the same value) as the virtual control word generated at the head-end system. The head-end system may include a scrambler configured to scramble content using the control word to produce scrambled content. The head-end system may also include a content delivery module configured to deliver the scrambled content to the chip set.

According to one aspect of the disclosure, a receiver may include the chip set as described herein. According to another aspect of the disclosure, a conditional access system may comprise the chip set, the smart card, and the head-end system as described herein. According to yet another aspect of the disclosure, a computer program product, implemented on a computer-readable non-transitory storage medium, the computer program product configured for, when run on a computer, executing the method in a manner according to the methods described herein.

Hereinafter, embodiments of the invention will be described in further detail. It should be appreciated, however, that these embodiments may not be construed as limiting the scope of protection for the present invention.

### BRIEF DESCRIPTION OF THE DRAWINGS

Aspects of the invention will be explained in greater detail by reference to exemplary embodiments shown in the drawings, in which:
FIG. 1 shows a prior art chip set using symmetric cryptography.
FIG. 2 shows another prior art chip set using asymmetric cryptography.
FIG. 3 shows a conditional access system of an exemplary embodiment of the disclosure.
FIG. 4 shows a method for use in a chip set in an illustrative embodiment of the disclosure.
FIG. 5 shows a method for use in a head-end system of a content delivery network in accordance with another illustrative embodiment of the disclosure.
FIG. 6 shows a method for use in a chip set according to yet another illustrative embodiment of the disclosure.
FIG. 7 shows a method for use in a head-end system of a content delivery network in another illustrative embodiment of the disclosure.

### DETAILED DESCRIPTION OF THE DRAWINGS

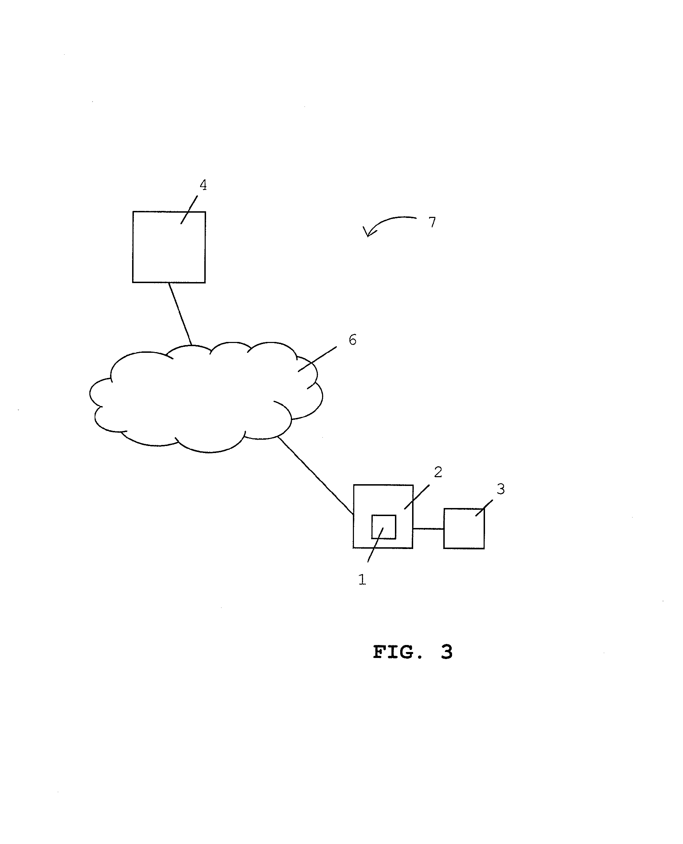

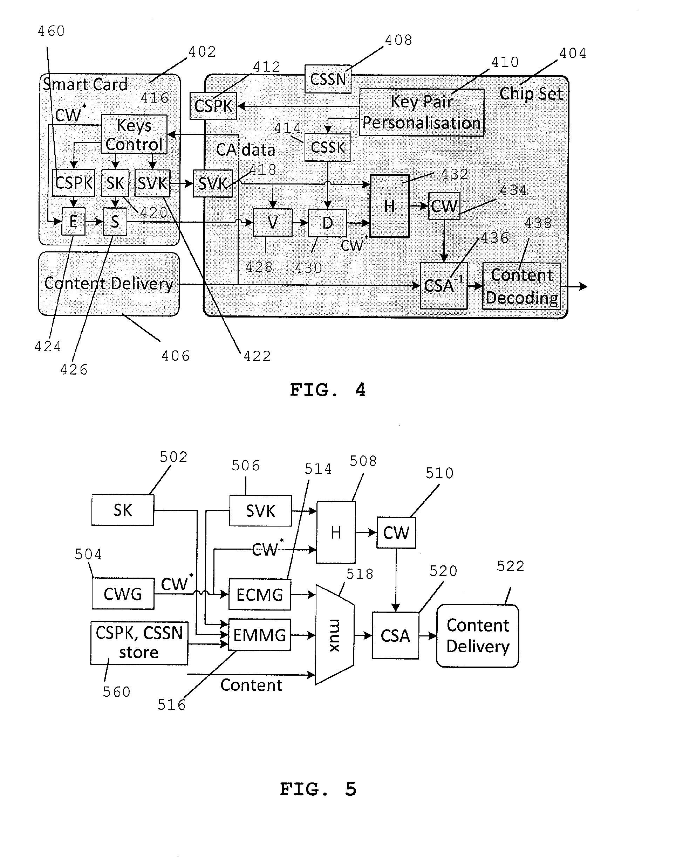

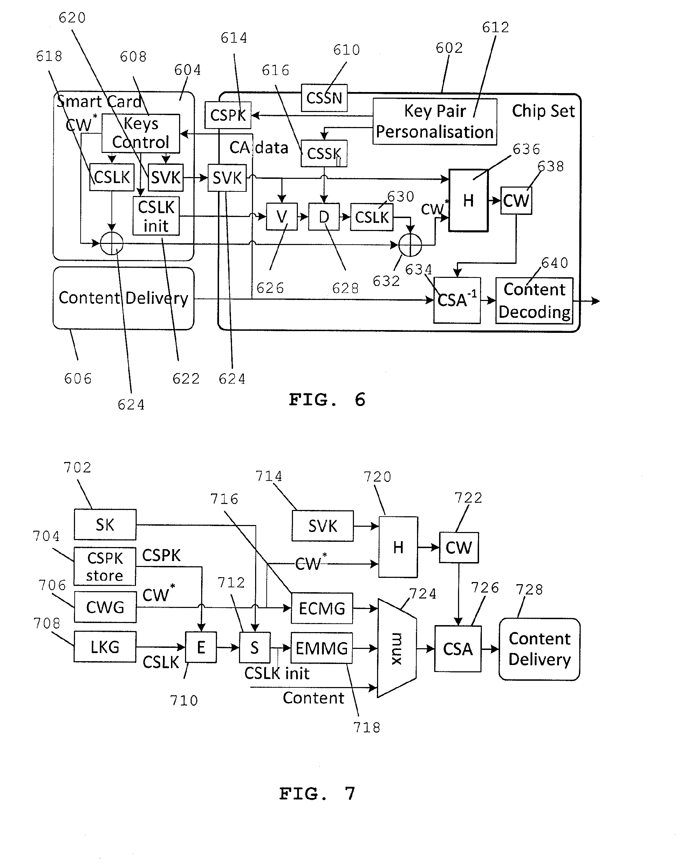

The systems and methods described in the disclosure protect the confidentiality of a CW and the authenticity (or single source authenticity) of a CW loading message that is delivered to a chip set, in the sense that content descrambling will fail if the message is not authentic. Typically, chip sets are a part of a CA/DRM system. FIG. 3 shows a conditional access system 7 of an exemplary embodiment of the invention. A head-end system 4 transmits ECMs, EMMs and a content stream scrambled with a CW (i.e. {Content}_{CW}) to one or more receivers **2** via the distribution network **6.** The head-end system may use any methods and systems described in relation to **FIGS. 5** and **7** to scramble the content and provide ECMs and EMMs to the receiver.

Receivers like receiver **2** may include chip set **1** for descrambling and/or decoding content, and may be communicatively connected to smart card **3.** In general, receiver **2** receives, filters and forwards ECMs and EMMs to smart card **3** for further processing. Smart card **3** loads control words onto chip set **1** using any methods and systems as described in relation to **FIGS. 4** and **6****.** The secure device **3** is, for example, a smart card and may be implemented in software running in a secured environment of the receiver **2.**

The bandwidth required for transmitting conditional access messages (EMMs or ECMs) using the methods and systems described in this disclosure is comparable to the bandwidth required by the existing mechanisms to securely load CWs onto a chip set. Because bandwidth is a valuable resource, the solution ought not degrade overall performance of the CA/DRM system. The new mechanism enhances security in the sense that it does not rely on secret keys handled by an entity that has little incentive to keep the keys confidential. In addition, the new mechanism can recover from a security breach in which the key pair of the authenticity mechanism is compromised, a security feature not offered by existing solutions. The present disclosure also describes a solution that enables multiple sources of trust and allows every CA/DRM system and CA/DRM system operator to establish a key loading mechanism independently.

**FIG. 4** shows a method for use in a chip set in an illustrative embodiment of the disclosure. By way of illustration, the solution is implemented in chip set **404** and smart card **402.** Chip set **404** may be personalized with a key pair preferably generated in chip set **404** (e.g., using key pair personalisation module **410).** During the personalisation phase, this key pair is associated with a chip set serial number CSSN. The key pair includes a chip set public key CSPK stored in memory elements **412** and **460** and a chip set secret key CSSK, stored in memory element **414.** The associated public-key cryptosystem protects the confidentiality of the CW. The use of public-key cryptography allows the chip manufacturer to publish both the CSSN and the CSPK for every chip that is produced, that is, only the authenticity of this information needs to be protected.

To prevent an attacker to also use the CSPK to insert CW loading messages, the systems and methods described in the disclosure have an additional mechanism that forces the chip set to verify the authenticity of a CW loading message. This mechanism prevents an attacker to issue CWs to the chip set even with a published CSPK. The systems and methods described in the disclosure achieve this by introducing another key pair that is created by the head-end system of a content delivery network. The key pair associated with the head-end system of the content delivery network includes a signature verification key SVK and a signature key SK. This key pair is used in a cryptographic scheme consisting of a signature generation algorithm and a signature verification algorithm. For such a scheme, either asymmetric or symmetric cryptographic techniques may be used. If an asymmetric scheme is used, then SVK is a public key, and SK is a secret key. If an asymmetric scheme is used, then SVK and SK are both secret keys. In addition, if one of the keys in the key pair (SK, SVK) of a symmetric scheme is known, then it is easy to derive the other key in the key pair.

In the embodiment shown in **FIG. 4****,** an asymmetric scheme is used. The signature verification key SVK, stored in memory element **422** of smart card **402,** is sent to and stored in memory element **418** of chip set **404.** The signature key SK is stored in memory element **420** of smart card **402.** In certain embodiments, SVK and SK may be provided by the head-end system of the content delivery network. If SVK and/or SK are provided by the head-end system of the content delivery network, the transmission of SVK and/or SK to the receiver/chip set may be protected. For example, to protect the confidentiality of SVK, it may be encrypted using the public key of the chip set of the receiver. To protect the authenticity and the confidentiality of SK, the secure channel between the head-end system and the smart card as offered by the conditional access system may be used.

The CA/DRM system sends the random value CW* (or interchangeably referred to as the "virtual control word") in an entitlement control message (ECM) to the receiver, and the ECM is filtered and forwarded to smart card **402.** In some embodiments, the virtual control word is not directly used for (de-)scrambling the content. Rather, a value derivable from CW*, namely the control word CW, is the key used for (de-) scrambling the content. Chip set **404** may include a communication module, preferably configured to communicate with the head-end system, for receiving the random value CW*. Smart card **402** may include a communication module for receiving ECMs and/or EMMs forwarded by chip set **404** and/or the receiver. The communication module may be implemented within keys control module **416.**

Unlike existing solutions, chip set **404** does not use the CW* directly in the descrambler (e.g., CSA⁻¹ module **436),** but derives a CW from CW* and SVK (stored in memory element **418)** using a hash function H located within H-module **432.** H-module **432** may merge the two inputs CW* and SVK before applying the hash function. In some embodiments, H-module **432** is implemented within a cryptographic module. The hash function H may also be any other suitable cryptographic function. Possible implementations of the function H preferably have the following property: given an output CW, it is hard (e.g., difficult, computationally difficult, infeasible or computationally infeasible) to find a key pair (SK*, SVK*) and a virtual control word CW** such that SVK* and CW** map to CW. In certain embodiments, "hard" may mean that an attacker may not be able to derive a key pair (SK*, SVK*) and a virtual control word CW**, such that SVK* and CW** map to CW, in polynomial time or space. In other embodiments, "hard" may be defined by specifying a lower bound on the number of operations or on the size of the memory required to find such values. As a third example, one may define "hard" by specifying an upper-bound on the probability that the property is not satisfied.

If an asymmetric cryptographic scheme is used to protect the authenticity of a CW loading message, then an example of a function H with this property is the following: (1) merge the inputs CW* and SVK to produce an intermediate result X, e.g., by appending the value of SVK to the value of CW*, (2) apply a 2^{nd} pre-image resistant hash function to the input X to produce the output CW. To see that the preferred property holds for this example, observe that, given the control word CW and the public key SVK, it will be hard for an attacker to determine an SVK* not equal to SVK, and a virtual control word CW** such that SVK* and CW** map to CW. To see this, assume that it is feasible for an attacker to generate such an SVK* and such a CW**. Then, given the output CW and the inputs SVK and CW*, the same method can be applied to generate a second pre-image comprising of SVK* and CW** to the hash function, as SVK* is not equal to SVK. This implies that the hash function is not 2^{nd} pre-image resistant, contradicting the assumption. As a result, the only option for the attacker is to determine a signature key associated with the public key of the head-end, i.e., SVK, which is, by definition, infeasible for an asymmetric scheme.

If a symmetric scheme is used, then an example of a function H is the following: (1) apply a one-way function or a pre-image resistant hash function to the secret key SVK to produce an intermediate result X, (2) merge X and CW* to produce an intermediate result Y, e.g., by appending the value of X to the value of CW* (3) apply a 2^{nd} pre-image resistant hash function to the intermediate result Y to produce the output CW. To see that the preferred property holds for this example, observe that, given CW, an attacker will be able to determine at most one output (i.e., the intermediate result X) of the pre-image resistant hash function applied in Step (1) and one CW** that map to the given CW in Step (3). By definition, it is infeasible to find any input SVK* to the pre-image resistant hash function that maps to this given output X.

Note that the implementation for the symmetric scheme may also be used in the asymmetric case, that is, one implementation of the function H can be used for both the symmetric case and the asymmetric case. In addition, notice that in both examples, the function H satisfies the desired property also in case the virtual control word CW*, and the output X of the pre-image resistant hash function in the symmetric case, are known (i.e., in case both inputs to the 2^{nd} pre-image resistant hash function are known). This can be seen as follows: given an output CW and the specified inputs to the 2^{nd} pre-image resistant hash function, it is, by definition, infeasible to determine a second, different set of inputs to the 2^{nd} pre-image resistant hash function that map to the given output CW. If an asymmetric scheme is used, then this implies that the attacker cannot determine a signature verification key different from SVK that maps to the given CW. The only option for the attacker is to determine a signature key associated with SVK, which is, by definition, infeasible for an asymmetric scheme. In the symmetric case, the attacker has exactly one output (i.e., the intermediate result X) of the pre-image resistant hash function. By definition, it is infeasible to find an input SVK* to the pre-image resistant hash function that maps to this given output X. After applying the function H, H-module **432** sends and stores CW in memory element **434.** Using CW, CSA⁻¹ module **426** may descramble content provided by content delivery module **406** and transmit descrambled content to content decoder **438** for further processing.

In **FIG. 4****,** public-key encryption module 'E' **424** and public-key decryption module 'D' **430** are responsible for protecting the confidentiality of a CW loading message. Signature module 'S' **426** and signature verification module 'V' **428** in **FIG. 4** protect the (single source) authenticity of a CW loading message. In certain embodiments, encryption module **424** and signature module **426** may either or both be implemented within a suitable security module. In general, any combination of modules **424, 426, 428** and **430** may be implemented in a suitable security module in the chip set or smart card. In this embodiment shown in **FIG. 4****,** the keys control module **416** uses the CSPK (stored in memory element **412)** to encrypt CW* using module **424.** In certain embodiments, CSPK may be provided by the head-end system of the content delivery network. The keys control module **416** may also use the signature key SK to sign the message using signature module **426.** The encrypted and signed CW* are then transmitted to chip set **404** for further processing. The encrypted and signed CW* may be transmitted using a transmission module or any suitable communication module configured to communicate between smart card **402** and chip set **404.**

The CW loading message that included CW* is subsequently received and processed by chip set **404.** As shown in **FIG. 4****,** chip set **404** uses signature verification module **428** to verify the authenticity of the transmitted CW loading message using SVK associated with the head-end system (to ensure that the message came from a legitimate source). Chip set **404** uses decryption module **430** to decrypt the transmitted CW* using the secret key CSSK (stored in memory element **414)** associated with chip set **404.** Because CW* was encrypted by the CSPK of chip set **404** at the smart card to ensure confidentiality, only the chip set having the corresponding CSSK may correctly decrypt CW*. In some embodiments, signature verification module **428** and decryption module **430** may either or both be implemented within a cryptographic module in chip set **404.** Any suitable cryptographic primitives may be used in the cryptographic module as long as the authenticity and confidentiality of the CW loading message being transmitted from smart card **402** to chip set **404** are protected. In some embodiments, signature verification module **428** may implement an asymmetric cryptographic operation (e.g., verifying an asymmetric digital signature). In some embodiments, signature verification module **428** may implement a symmetric cryptographic operation (e.g., verifying a MAC value). In both cases, the verification may include comparing a computed asymmetric digital signature or MAC value with a received value. Alternatively, a verification scheme with message recovery may be used. If the SVK associated with signature verification module **428** is a secret key, then preferably the confidentiality of SVK is protected when transmitted to the chip set, e.g., by encrypting it with the chip set public key CSPK of the chip set. In some embodiments, more layers of keys may be used to protect the authenticity or the confidentiality of CW*.

Once the virtual control word CW* is obtained, chip set **404** uses the signature verification key SVK of the head-end system stored in memory location **418** to obtain CW. To obtain CW, SVK and CW* are merged and processed in H-module **432.** CW, the output of H-module **432** is stored in memory element **434** and is then provided to descrambler module CSA⁻¹ **436** to descramble the content transmitted from content delivery module **406.** The H-module protects the authenticity of SVK, in the sense that CW can only be obtained if SVK is authentic. That is, if the signature verification key of a key pair (SK*, SVK*), determined by an attacker not knowing the signature key SK of the head-end system, is provided as input to the chip set, then the H-module will not output the correct CW, and consequently, the content descrambling will fail. The descrambled content is then provided to content decoder **438** for decoding.

If an asymmetric scheme is used to protect the confidentiality of CW*, as in **FIG. 4****,** and if the function H is a 2^{nd} pre-image resistant hash function, then in the event that an attacker manages to compromise any number of chip sets to obtain all key values (CW*, CW, SVK and a number of CSSKs) and key processing details, it is computationally infeasible to create an input for any chip set that results in the appropriate CW being loaded into the descrambler module CSA⁻¹. That is, the attacker requires knowledge of the secret signing key SK in order to create messages that load a correct CW into a descrambler, and otherwise the content descrambling process will fail. In addition, if an SK is compromised, then such a breach may be corrected by updating the key pair (SK, SVK) for the chip sets and the smart cards that were not compromised, an option not available in existing solutions. If a symmetric scheme is used to protect the confidentiality of CW*, then the level of security is reduced, in the sense that CW loading messages can be created if the secret key SVK (or SK) is compromised (recall that, in a symmetric scheme, one of the keys in the key pair (SK, SVK) can be easily derived from the other key). However, notice that such a security breach can also be corrected by updating the key pair (SK, SVK).

To provide a suitable content stream to a chip set/smart card configuration that is configured like chip set **404** and smart card **402,** the head-end system (e.g., system implementing content delivery module **406)** also needs to include the H-module to derive the CW from the CW* value that is transmitted as part of an ECM. Content delivery module **406** preferably scrambles the content using CW obtained from CW*.

**FIG. 5** shows a method for use in a head-end system of a content delivery network in accordance with another illustrative embodiment of the disclosure. In some embodiments, the head-end system may include memory elements **502** and **506** for storing a pair of keys, consisting of a signature key SK and a signature verification key SVK. The head-end system preferably includes a CW generator (CWG **504,** "control word generator"), which generates random values for CW*. The head-end system may also include memory element **560** to store a list of (CSSN, CSPK) pairs associated with chip sets. The ECM generator (ECMG **514)** transmits CW* in encrypted form. For instance, ECMG **514** generates and transmits an ECM that includes CW* from CWG **504.** The head-end system may include an EMM generator (EMMG **516)** for generating one or more messages that include at least one of (or a secured form thereof): signature key stored in memory element **502,** signature verification key stored in memory element **506,** or a (CSSN, CSPK) pair stored in memory element **560.** Mux 518 may be used to select the appropriate data to be transmitted to CSA module **520,** choosing at least one of: an ECM outputting from ECMG **514,** an EMM outputting from EMMG **516,** and content. ECMs and/or EMMs may be transmitted using any suitable communication module in the head-end system communicably connected with chip set **404.** The content (i.e., output of mux **518)** may be passed to CSA module **520** so that it can be scrambled using CW (e.g., using any suitable scrambler). Subsequently, the scrambled content is provided to content delivery module **522,** such that it may be delivered to a receiver, e.g., using any suitable content delivery module within the head-end system.

Preferably, the head-end system includes H-module **508** to produce CW (e.g., such as the control word CW stored in memory element **510)** needed to scramble content. H-module **508** may be implemented in a cryptographic module. To produce CW, H-module **508,** preferably implementing a hash function corresponding to the H-module **432** in **FIG. 4****,** derives the CW from CW* value that is generated by CWG **504** and transmitted in an ECM provided by ECMG 514. H-module 508 combines the signature verification key SVK stored in memory element 506 with CW* generated by CWG 504 and applies a hash function to convert the CW* value into CW.

The methods and systems described in relation to FIGS. 4 and 5 may require holding the signature key SK in secure storage (e.g., memory element 420, of smart card 402). Keeping such a global secret in all smart cards is not desirable from a security perspective, especially if an asymmetric cryptosystem is used to protect the authenticity of a CW loading message. The described solution may also require public-key cryptography calculations for all CWs (e.g., performed in encryption/decryption modules 424 and 430, or in signature/signature verification modules 426 and 428). This may introduce significant CW processing overheads in both the smart card and the chip set (e.g., smart card 402 and chip set 404).

A variant implementation of the invention addresses these concerns. In some embodiments, the methods and systems may use a symmetric encryption algorithm to protect the confidentiality and the authenticity of a CW (e.g., using a chip set load key CSLK). These embodiments generate the local CSLK for a particular chip set. In certain embodiments, CSLK may be generated by the head end system or the smart card. In some embodiments where the CSLK is not generated by the smart card, the local CSLK for a particular chip set is transmitted as an initialisation pattern to the smart card connected to an identified chip set based on the CSSN value and/or the corresponding CSPK value. The initialisation pattern includes an encrypted version of CSLK. The CSLK is encrypted in such a way that can be processed in the chip set to produce a CSLK value. The smart card then receives the CSLK from the head-end system together with the initialisation pattern. As such, these embodiments no longer require a smart card to store the signature key SK.

In some embodiments, CSLK and the initialization pattern are transmitted from the head-end system to the receiver using an EMM, and the receiver may filter the EMM and forward it to the keys control module in the smart card for processing. If a unique pairing between the smart card and the chip set is not known within the head-end system, then preferably separate EMMs are used for packaging and transmitting CSLK and the initialisation pattern. In certain embodiments, the smart card may subsequently forward the initialisation pattern to the chip set.

**FIG. 6** shows a method for use in a chip set according to yet another illustrative embodiment of the disclosure, where CSLK is used for loading a control word onto a chip set. The initialisation pattern 'CSLK init', as described further in relation to **FIG. 7****,** is provided from the head-end of a content delivery system to chip set **602** and is forwarded to the smart card **604.** In **FIG. 6****,** chip set **602** is associated with a chip set serial number CSSN and the value of CSSN is stored in memory element **610.** Chip set **602** may be associated with a key pair that includes a chip set public key CSPK and a chip set secret key CSSK, stored in memory elements **614** and **616,** respectively. The key pair may be generated by key pair personalisation module **612.**

Smart card **604** includes keys control module **608** for generating and/or processing keys targeted for chip set **602.** A communication module (e.g., within keys control module **608)** may be configured to receive CW* and CSLK. According to some embodiments, appropriate keys and CA/DRM data, such as CW* and CSLK, are provided from content delivery module 606 to the receiver and/or chip set **602,** and are subsequently forwarded to smart card **604.**

Smart card **604** encrypts CW* with CSLK (stored in memory element **618)** to produce {CW*}_{CSLK} using symmetric encryption module **624.** The encryption of CW* with CSLK may be performed in any suitable security module in smart card **604.** The encrypted version of CW*, {CW*}_{CSLK}, is then transmitted to chip set **602,** where {CW*}_{CSLK} is to be decrypted using symmetric encryption module **632** using the CSLK value stored in memory element **630** to obtain CW*.

The initialisation pattern may be transmitted from the smart card to chip set **602** using any suitable transmission module in the smart card, communicably connected with chip set **602.** The encrypted version of CW* and/or initialisation pattern may be received at chip set **602** using yet another communication module.

To obtain CSLK for decrypting {CW*}_{CSLK}, chip set **602** includes two cryptographic operations, implemented as signature verification module **626** and decryption module **628** to obtain CSLK from CSLK init (stored in element **622).** Signature verification module **626** and decryption module **628** may be implemented in any suitable cryptographic module within chip set **602.** Chip set **602** uses signature verification module **626** and the SVK of the head-end system (stored in memory element **620** of smart card **604** and memory element **624** of chip set **602),** to verify the authenticity of CSLK init. After verifying the authenticity of CSLK init, it is decrypted using CSSK of chip set **602** (stored in memory element **616).** Because CSLK init was encrypted by the CSPK of chip set **602** at the head-end system to ensure confidentiality, only the chip set having the corresponding CSSK may correctly decrypt the CSLK init message.

Once chip set **602** obtains CSLK, then {CW*}_{CSLK} may be decrypted to obtain CW* using the obtained CSLK, using any suitable security module. The authenticity of the message {CW*}_{CSLK} is protected, in the sense that the decryption only results in CW* if the key CSLK is authentic. Using H-module **636** and the SVK value stored in memory element **624,** SVK and CW* may be merged and processed to produce CW. Said H-module **636** may be implemented in any suitable cryptographic module. The value of CW is stored in memory element **638,** and is provided to CSA⁻¹ module **634** such that it can be used to decode content from content delivery module **606** using content decoder **640.** The H-module protects the authenticity of the signature verification key SVK, in the sense that CW can only be obtained if SVK is authentic. That is, if the signature verification key of a key pair (SK*, SVK*), determined by an attacker not knowing the signature key SK of the head-end system, is provided as input to the chip set, then the H-module will not output the correct CW, and consequently, the content descrambling will fail.

As shown in **FIG. 6****,** the symmetric load key CSLK is used to decrypt CW* values that are encrypted with a symmetric encryption algorithm and the load key CSLK. H-module **636** suitably derives the CW from the CW* and the SVK, such that CW may be loaded into CSA⁻¹ module **634** to descramble content. This implementation has the benefit that the chip set only needs to perform the public-key cryptographic operation(s) when processing a CSLK init message to obtain CSLK. During normal operation, the CW processing overhead resembles that of the existing solutions. The computation step associated with the H-module (e.g., H-module **636** of **FIG. 6****)** is comparable to that of a normal symmetric encryption step. Notice that an attacker can create CW loading messages if he/she manages to compromise a CSLK. However, a CSLK is unique per chip set, that is, the attack has to be performed independently for every chip set. Notice that the current solution for protecting a CW based on symmetric cryptographic algorithms as shown in **FIG. 1** also has this property.

To work with the smart card/chip set configuration described in relation to **FIG. 6****,** the head-end systems is configured to produce the load key initialisation pattern (CSLK init) for each chip set. **FIG. 7** shows a method for use in a head-end system of a content delivery network in another illustrative embodiment of the disclosure. Specifically, the head-end system generates a random load key CSLK (e.g., using load key generator LKG **708)** and performs suitable cryptographic calculations using the relevant CSPK (provided by CSPK store **704)** and SK keys (stored in memory element **702)** to produce the load key initialisation pattern. In particular, encryption module **710** in head-end system encrypts CSLK (provided by LKG **708)** using CSPK (provided by CSPK store **704).** Then, signature module **712** uses SK provided by memory element 702 to produce the CSLK initialisation pattern 'CSLK init', which is then packaged along with the CSLK as an EMM by EMMG **718.** Said EMM is targeted at the smart card (e.g., smart card **604)** connected to the chip set with the corresponding CSPK or CSSN (e.g., chip set **602).** If a unique pairing between the smart card and the chip set is not known within the head-end system, then preferably separate EMMs are used for packaging and transmitting CSLK and CSLK init.

Similar to **FIG. 5****,** the head-end system shown in **FIG. 7** generates CW* using control word generator CWG **706** and packages CW* into an ECM using ECMG **716.** The CW* generated by CWG **706,** along with signature verification key SVK (stored in memory element **714)** are merged and processed by H-module **720** to generate CW. Said H-module **720** may be implemented in any suitable cryptographic module within the head-end system. CW is stored in memory element **722.** Preferably, the implementation of the hash function in H-module **720** corresponds to H-module **636.** The resulting CW is then provided to CSA module **726** such that the content can be scrambled. Mux **724** may be used to select at least one of: ECM outputting from ECMG **716,** EMM outputting from EMMG **718** and content. ECMs and/or EMMs may be transmitted using any suitable communication module in the head-end system communicably connected with chip set **602.** In some instances, mux **724** may select content to be provided to CSA module **726** to produce scrambled content. Scrambled content may be produced by any suitable scrambler within the head-end system. Said scrambled content is then provided to content delivery module **728** for delivery over the content delivery network.

Similar to the methods and systems described in relation to **FIGS. 4** and **5****,** the head-end system also generates an ECM including a CW* and scrambles the content using CW.

However, the signature key SK is only present in the head-end system (as seen in **FIG. 7****),** and not in the smart card (seen as smart card **604).** In this configuration, SK may be better protected from attackers. The removal of public-key cryptographic operations for protecting CW* may reduce the processing overhead to process scrambled content in the smart card and in the chip set.

In another variant implementation of the invention, the CSLK initialisation pattern 'CSLK init' is generated inside the smart card. That is, in this variant, the modules **702, 704, 708, 710** and **712** in **FIG.** 7 are implemented inside the smart card, and not inside the head-end system. Note that the smart card generates the CSLK, and that the head-end system provides SK to the smart card in this variant. That is, the head-end architecture shown in **FIG. 5** can be used. Obviously, this variant no longer has the advantage that SK is only present in the head-end system. However, as in the variant implementation shown in **FIGS. 6** and **7****,** the removal of public-key cryptographic operations for protecting CW* may reduce the processing overhead to process scrambled content in the smart card and in the chip set. In addition, in this configuration less EMM bandwidth may be required than in the variant implementation depicted in **FIGS.** 6 and 7, offering another trade-off between security, computational complexity and bandwidth consumption.

The methods and systems described above may be used in a system such as the head-end system described in the DVB SimulCrypt specification (DVB = digital video broadcasting). The DVB SimulCrypt specification allows two or more CA/DRM systems to share the control word as a common key. The keys to securely distribute the CW and to manage access to the scrambled streams are specific to each of the cooperating CA Systems. A common head-end system protocol for facilitating the sharing of the CW streams used in scrambling the digital TV content streams is described in the DVB SimulCrypt specification. The methods and systems described in **FIGS. 4-7** may be implemented using DVB SimulCrypt by extending the system with an optional H-module and with means to share the (SK, SVK) pairs between participating CA/DRM systems.

In some embodiments, the output of the function H may include more than one value to be used in the content (de)scrambling mechanism. For instance, the output of the H-module can consist of the virtual control word CW* and a second key derived from SVK and CW*. These two keys can then be used in a super-scrambling solution where one key is used in a first scrambling step and the other key is used in a second scrambling step. The chip set may be modified to perform two descrambling steps instead of one. In general, the output of the H-module may include multiple content (de-)scrambling keys that can be used in a super-scrambling solution consisting of multiple content (de-)scrambling steps. The output of the function H may also include more than one control word. Each of these control words can be used for (de-)scrambling an associated piece of content. For instance, the output of the H-module can consist of two control words. The first control word can be used for (de)scrambling a first piece of content, and the second control word can be used for (de-scrambling) a second piece of content. In embodiments in which the output of the function H includes more than one value to be used in the content (de-)scrambling mechanism, possible implementations of the function H preferably have the following property: given an output Y, it is hard (e.g., difficult, computationally difficult, infeasible or computationally infeasible) to find a key pair (SK*, SVK*) and a virtual control word CW** such that SVK* and CW** map to Y. In addition, one may require that the preferred property of the function H holds independently for parts of the output, e.g., for all keys associated with one piece of content. Notice that this is a stronger property which is useful, but not strictly necessary, as the weaker property (i.e., the property described above on the output Y) already implies that the descrambling of at least one of the pieces of content associated with the output of H will fail.

The methods and systems described in this disclosure provide significant benefits to chip manufacturers who wish to implement the secure loading functionality without the operational and logistical problems. They may also provide a way to recover from security breaches by replacing the key pair (SK, SVK), a security feature not available in existing solutions.

While generic public-key cryptography modules (e.g., modules **424, 426, 428, 430, 626** and **628)** are described, it is understood that any other suitable cryptographic operations and infrastructure may be used as long as the authenticity and confidentiality of a CW loading message are provided. As an example, the authenticity mechanism may use an asymmetric scheme in which both SK and SVK are secret keys. A well known example of such a system is RSA with a randomly selected encryption (or decryption) exponent, both of which are kept secret. If an authenticity mechanism is used in which SVK is a secret key, then preferably the SVK is transmitted in encrypted form to the chip set, e.g., using the chip set secret key CSSK of the associated chip set as an encryption key. It may also be possible to insert additional key layers to the methods and systems described in the present disclosure.

One embodiment of the invention may be implemented as a program product for use with a computer system. The program(s) of the program product define functions of the embodiments (including the methods described herein) and can be contained on a variety of computer-readable storage media. The computer-readable storage media can be a non-transitory storage medium. Illustrative computer-readable storage media include, but are not limited to: (i) non-writable storage media (e.g., read-only memory devices within a computer such as CD-ROM disks readable by a CD-ROM drive, ROM chips or any type of solid-state nonvolatile semiconductor memory) on which information is permanently stored; and (ii) writable storage media (e.g., floppy disks within a diskette drive or hard-disk drive or any type of solid-state random-access semiconductor memory, flash memory) on which alterable information is stored.

It is to be understood that any feature described in relation to any one embodiment may be used alone, or in combination with other features described, and may also be used in combination with one or more features of any other of the embodiments, or any combination of any other of the embodiments. Moreover, the invention is not limited to the embodiments described above, which may be varied within the scope of the accompanying claims.

## Claims

1. A method for securely obtaining a control word in a chip set of a receiver, said control word for descrambling scrambled content transmitted from a content delivery network, the method comprising:
receiving, at the chip set, a secured version of a virtual control word from a smart card communicably connected to the chip set, wherein the secured version of the virtual control word is a virtual control word provided from a head-end system to the smart card and secured by the smart card to protect its authenticity and confidentiality;
obtaining the virtual control word from the secured version of the virtual control word; and
providing the virtual control word and a signature verification key associated with the head-end system as inputs to a cryptographic function in the chip set to produce a given output, the given output including at least one control word, wherein the cryptographic function has the property that it is infeasible to determine a key pair including a signature key, a signature verification key associated with the signature key and another virtual control word, such that the determined signature verification key and the other virtual control word map to the given output of the cryptographic function.

2. The method according to claim 1, wherein the secured version of the virtual control word comprises the virtual control word secured by an encryption of the virtual control word using a public key associated with the chip set and a signature of the virtual control word using a secret signature key associated with the head-end system, such that the secured version of the virtual control word is decryptable by the chip set using a secret key associated with the chip set and that the signature of the virtual control word is verifiable by the chip set using the signature verification key associated with the head-end system.

3. The method according to claim 1, further comprising:
receiving, at the chip set, a secured version of a load key, wherein the secured version of the load key is a load key secured to protect its authenticity and confidentiality; and
wherein the secured version of the virtual control word, as received at the chip set, is a virtual control word secured by an encryption of the virtual control word using the load key.

4. The method according to claim 3, wherein the secured version of the load key, as received at the chip set is a load key secured by an encryption of the load key using a public key associated with the chip set and a signature of the load key using a secret signature key associated with the head-end system, such that the secured version of the load key is decryptable by the chip set using a secret key associated with the chip set and that the signature of the load key is verifiable by the chip set using a signature verification key associated with the head-end system.

5. The method according to any one of the claims 1-4, further comprising receiving the signature verification key associated with the head-end system from the head-end system.

6. A method for enabling the secure loading of a control word onto a chip set of a receiver, the control word allowing the receiver to descramble scrambled content transmitted from a content delivery network, the method comprising:
receiving, at a smart card communicably connected to the chip set, a virtual control word from a head-end system of the content delivery network;
securing, in the smart card, the virtual control word to produce a secured version of the virtual control word, such that its authenticity and confidentiality are protected; and
transmitting the secured version of the virtual control word from the smart card to the chip set.

7. The method of claim 6, wherein securing the virtual control word comprises encrypting the virtual control word with a public key associated with the chip set and signing the virtual control word with a secret signature key associated with the head-end system, such that the secured version of the virtual control word is decryptable by the chip set using a secret key associated with the chip set and the origin of the secured version of the virtual control word is verifiable by the chip set using a signature verification key associated with the head-end system.

8. The method of claim 6, further comprising:
transmitting a secured version of a load key to the chip set, wherein:
the secured version of the load key, as transmitted to the chip set, is secured to protect its authenticity and confidentiality; and
the secured version of virtual control word, as transmitted to the chip set, is secured by an encryption of the virtual control word using said load key.

9. The method of any of the claims 6-8, further comprising providing a signature verification key associated with the head-end system of the content delivery network to the chip set to enable the chip set to derive the control word from the virtual control word.

10. A method for enabling the loading of a control word from a head-end system of a content delivery network onto a chip set of a receiver, the control word allowing the receiver to descramble scrambled content transmitted from the content delivery network, the method comprising:
generating a virtual control word at the head-end system;
transmitting the virtual control word from the head-end system to a smart card via the intermediary of the receiver, wherein the smart card is communicably connected to the chip set;
combining, using a cryptographic function, at least the virtual control word with a signature verification key associated with the head-end system as inputs to to produce a given output, the given output including at least one control word, wherein the cryptographic function has the property that it is infeasible to determine a key pair including a signature key, a signature verification key associated with the signature key and another virtual control word, such that the determined signature verification key and the other virtual control word map to the given output of the cryptographic function;
scrambling content using the control word to produce scrambled content; and
transmitting the scrambled content to the chip set.

11. The method of claim 10, further comprising providing the signature verification key from the head-end system to the receiver to enable the chip set of the receiver to derive the control word from the virtual control word.

12. A chip set in a receiver for securely obtaining a control word, the control word for descrambling scrambled content received from a content delivery network, the chip set comprising:
a communication module configured to receive a secured version of a virtual control word from a smart card communicably connected to the chip set, wherein the secured version of the virtual control word is a virtual control word provided from a head-end system to the smart card and secured by the smart card to protect its authenticity and confidentiality;
a security module configured to obtain the virtual control word from the secured version of the virtual control word; and
a cryptographic module configured to provide at least the virtual control word and a signature verification key associated with the head-end system as inputs to a cryptographic function to produce a given output, the given output including at least one control word, wherein the cryptographic function has the property that it is infeasible to determine a key pair including a signature key, a signature verification key associated with the signature key and another virtual control word, such that the determined signature verification key and the other virtual control word map to the given output of the cryptographic function.

13. A smart card communicably connected to a chip set for enabling the secure loading of a control word onto the chip set of a receiver, the control word allowing the receiver to descramble scrambled content transmitted from a content delivery network, the smart card comprising:
a communication module configured to receive a virtual control word from a head-end system of the content delivery network;
a security module configured to secure the virtual control word to produce a secured version of the virtual control word, such that its authenticity and confidentiality are protected; and
a transmission module configured to transmit the secured version of the virtual control word from the smart card to the chip set.

14. A head-end system of a content delivery network for enabling a loading of a control word onto a chip set of a receiver, the control word allowing the receiver to descramble scrambled content transmitted from the content delivery network, the head-end system comprising:
a control word generator configured to generate a virtual control word;
a communication module configured to transmit the virtual control word from the head-end system to a smart card via the intermediary of the receiver, wherein the smart card is communicably connected to the chip set;
a cryptographic module combining, using a cryptographic function, at least the virtual control word with a public key associated with the head-end system as to produce a given output, the given output including at least one control word, wherein the cryptographic function has the property that it is infeasible to determine a key pair including a signature key, a signature verification key associated with the signature key and another virtual control word, such that the determined signature verification key and the other virtual control word map to the given output of the cryptographic function;
a scrambler configured to scramble content using the control word to produce scrambled content; and
a content delivery module configured to deliver the scrambled content to the chip set.

15. A receiver comprising the chip set according to claim 12.

16. A conditional access system comprising the chip set according to claim 12, the smart card according to claim 13 and the head-end system according to claim 14.

17. A computer program product, implemented on computer-readable non-transitory storage medium, the computer program product configured for, when run on a computer, executing the method steps according to any one of the claims 1-11.
